# EUROPÄISCHE PATENTSCHRIFT

(11) **EP 1 029 118 B1**
(45) Veröffentlichungstag und Bekanntmachung des Hinweises auf die Patenterteilung: **08.08.2001**
(21) Anmeldenummer: 98963440.7
(22) Anmeldetag: 11.11.1998
(51) Int. Cl.: C25B 9/00, F16J 15/10

(54) **ELEKTROLYSEZELLENABDICHTUNG**
SEALING OF ELECTROLYTIC CELLS
ETANCHEIFICATION D'UNE CELLULE ELECTROLYTIQUE

(30) Priorität: 13.11.1997 DE 19750314
(43) Veröffentlichungstag der Anmeldung: 23.08.2000
(73) Patentinhaber: W.L. GORE & ASSOCIATES GmbH, 85640 Putzbrunn (DE)
(72) Erfinder: GANTNER, Josef, D-85662 Hohenbrunn (DE); RODERER, Klaus, D-81543 München (DE); Wendl, Manfred, 83026 Rosenheim (DE)
(74) Vertreter: Klunker . Schmitt-Nilson . Hirsch
(86) Internationale Anmeldenummer: EP9807193
(87) Internationale Veröffentlichungsnummer: WO9925900

(56) Entgegenhaltungen:
- EP-A- 0 280 359
- WO-A-89/11608
- FR-A- 2 308 288
- FR-A- 2 659 123

## Beschreibung

Die Erfindung betrifft eine Dichtung für eine Elektrolysezellenanordnung, eine Elektrolysezellenanordnung mit einer solchen Dichtung, die Verwendung einer solchen Dichtung zum Abdichten einer Elektrolysezelle sowie ein Verfahren zum Abdichten einer Elektrolysezelle.

Elektrolysezellen werden u.a. für die Herstellung von Chromsäure, H₂ und O₂ aus H₂O, oder Chlor und Alkalimetallhydroxiden durch Elektrolyse wässriger Alkalimetallchloridlösungen verwendet, wobei insbesondere Elektrolysezellen vom Membrantyp zum Einsatz gelangen. Bei Elektrolysezellen vom Membrantyp wird im allgemeinen eine folienförmig ausgebildete Membran aus einem Ionenaustauschmaterial verwendet, wobei derartige Zellen im allgemeinen monopolare oder bipolare Elektrodenkonstruktionen aufweisen. Die Membrane in Folienform wird zwischen den Seiten von Rahmenelementen eingeklemmt oder anderweitig gehalten. Hinzu kommt eine Dichtung, die zwischen mindestens einem der Rahmenelemente und der Oberfläche der Membrane eingesetzt wird, um eine flüssigkeits- und gasdichte Dichtung beim Verspannen der Rahmen und der Dichtungen zu bilden, so daß eine Leckage von Elektrolyt und dem Endprodukt nicht entweichen kann. Unter Flüssigkeitsdicht ist zu verstehen, daß keine sichtbare Flüssigkeitstropfenleckage bei Betrieb der Anordnung auftritt, während unter Gasdichtigkeit zu verstehen ist, daß bei einer Flächenpressung von 10 MPa die Leckrate ≤ 10 mg/ms ist.

Ein Verspannen der Rahmen wird typischerweise manuell oder mechanisch unter Verwendung von Hydraulikkolben oder von anderen Arten druckaufbringender Vorrichtungen ausgeführt, um die Elektrodenrahmen und die trennenden Dichtungen zusammenzupressen. Hierbei ist es insbesondere wünschenswert, eine derartige Abdichtung ohne Beschädigung der Membrane zu erzielen.

Das üblicherweise zwischen der Membrane und einem Elektrodenrahmenelement einer Elektrolysezelle verwendete Dichtungsmaterial besteht aus einem chemisch beständigen, federnd nachgiebigen Material, zum Beispiel einem Elastomer. Im Handel erhältliche, bipolare und monopolare Elektrolysezellenanordnungen mit Membranen verwenden im allgemeinen Ethylenpropylen (EP) oder Ethylenpropylendien (EPD) als Dichtungsmaterial zwischen der Membrane und den Elektrodenrahmen. Spezielle Dichtungen, die für diesen Zweck hergestellt werden, sind beispielsweise Flachschicht- oder O-Ring-EPD-Dichtungen, welche üblicherweise in die Zellen eingebaut werden. In letzter Zeit kommen auch vermehrt ePTFE-Dichtungen aus gesinterten PTFE-Platten in Verbindung mit einer aufgelegten ePTFE-Schnur zur Anwendung.

Jedoch neigen die oben erwähnten Materialien dazu, sich zu deformieren und nach auswärts zu expandieren, wenn über die Rahmenelemente Druck auf die Dichtung aufgebracht wird. Wenn sich die Dichtungen nach auswärts verformen, dann neigen manche Separatoren bzw. Membranen, welche sich in Berührung mit den Dichtungen befinden, dazu, sich unter der Einwirkung der sich nach auswärts verformenden Dichtungen zu dehnen. Dieses Dehnen des Separators bzw. der Membrane kann verursachen, daß die Membranen reißen, wenn die Rahmen zu einer fluiddichten Zelle komprimiert werden. Darüber hinaus kann es vorkommen, daß die bekannten federnd nachgiebigen Dichtungen eine derart hohe Kompressionskraft erfordern, daß die Gefahr des Beschädigens oder Zerreißens der Membrane besteht.

Außerdem neigen derartige, federnd nachgiebige Dichtungen dazu, nach Freigabe einer auf sie einwirkenden Kompressionsbeanspruchung ihre ursprüngliche Größe und Gestalt wiederzugewinnen. Infolgedessen können diese federnd nachgiebigen Dichtungen nicht vorkomprimiert werden, so daß die Membrane mit der Dichtung zwischen die Zellenrahmen eingebaut werden muß, bevor die Dichtung komprimiert werden kann. Dies erhöht die Wahrscheinlichkeit, daß die Membrane beschädigt wird, wenn sie zusammen mit einer solchen, federnd nachgiebigen Dichtung komprimiert wird.

Aus der EP 0 195 072 B1 (The Dow Chemical Company) ist eine Elektrolysezellenanordnung der eingangs definierten Art bekannt, bei welcher die Dichtung aus einem nicht elastischen, komprimierbaren Material besteht, das in Abwesenheit des Separators bereits vollständig zu einem solchen Ausmaß permanent vorkomprimiert ist, daß es bereits dem Hauptteil der Kompressionskräfte unterworfen ist, die nötig sind, um eine flüssigkeits- und gasdichte Abdichtung zu bilden.

Aus der EP 0 280 359 (Metallgesellschafts AG) ist eine Dichtung für die aufeinandergepreßten Elektrodenrahmen einer Membranelektrolyseanordnung zur Erzeugung von Natronlauge, Wasserstoff und Chlor aus einer NaCl-Sole bekannt, wobei die Membran mit ihrem Rand zwischen einer zweiteiligen Dichtung liegt. Dabei besteht mindestens ein Dichtungsteil aus einem flachen Kernrahmen aus Asbest und zwei auf gegenüberliegenden Flächen des Kernrahmens aufgesetzten Dichtungsrahmen aus Graphit, wobei dieses Gebilde von einer Folienhülle umgeben ist.

Aus der EP 0 416 031 B1 (W.L. Gore & Associates) ist eine Dichtung bekannt, die aus einem flexiblen polymeren Material gebildet ist, wobei diese Dichtung wenigstens einen ersten Bereich und wenigstens einen zweiten Bereich aufweist, der eine geringere Dichte als der erste Bereich besitzt, um eine wirksame Abdichtung bei geringen Druckbelastungen zu ermöglichen. Dazu besteht das polymere Material aus einem Körper aus porösem Polytetrafluorethylen, der normalerweise unter seinem Eigengewicht deformierbar wäre. Da jedoch der erste Bereich der Dichtung verdichtet ist, wird es der Dichtung ermöglicht, sich selbst gegen Deformation unter ihrem Eigengewicht zu tragen.

Darüber hinaus sind für Elektrolysezellenabdichtungen bereits zweiteilige Dichtungen verwendet worden, bei welchen eine separate erste Dichtungskomponente, die primär in Form eines Abstandsrahmens ausgebildet ist, und eine separate zweite Dichtungskomponente, insbesondere in Form einer Dichtungsschnur aus PTFE, zusammengefügt worden, wobei nach dem Einfügen dieser beiden Dichtungskomponenten zwischen einen ersten Rahmen oder einen zweiten Rahmen und einen Separator, insbesondere in Form einer Membrane, und nach dem Aufbringen einer Druckkraft auf diese Anordnung die erste Dichtungskomponente in erster Linie für eine Abstandshaltung und die zweite Dichtungskomponente in erster Linie für eine flüssigkeits- und gasdichte Abdichtung zu sorgen haben. Die oben erwähnte Abstandshaltefunktion der ersten Dichtungskomponente ist erforderlich, um den Abstand zwischen Separator und Elektrode konstant zu halten, das heißt, die Dichtung darf in der Praxis, insbesondere bei Dauerbetrieb sich nicht setzen. Bei der praktischen Anwendung dieser bekannten zweiteiligen Dichtungen hat es sich herausgestellt, daß ihre Montage außerordentlich kompliziert und aufwendig ist, zumal insbesondere im Zuge des Verpressens der Dichtung, beispielsweise durch Schraubenkräfte im Falle einer Flanschverbindung, sich Spannungsmaximum möglichst zentral zum verpreßten Dichtungsabschnitt liegen muß.

Aus FR 2 659 123 A1 ist im Zusammenhang mit chemischen Einrichtungen eine Dichtung mit grundsätzlich ähnlichem Aufbau bekannt, wobei die Dichtungskomponenten im Falle der Korrosionsgefahr in eine chemisch inerte PTFE-Folie gehüllt sind.

Allgemein wird bei Dichtungen dieser Art gefordert, daß sie ein erheblich reduziertes Querverfließen und ein außerordentlich geringes Setzverhalten aufweisen.

Darüber hinaus sind allgemein Dichtungen aus multidirektional orientiertem expandierten Polytetrafluorethylen (ePTFE) in Band- oder Segmentform bekannt, wobei sich derartige Dichtungen durch höhere Querfestigkeit auszeichnen, als z.B. monodirektional orientiertes ePTFE. Aber auch monodirektionales ePTFE weist bereits geringeres Setzverhalten gegenüber nicht expandiertem PTFE auf.

Der vorliegenden Erfindung liegt die Aufgabe zugrunde, eine verbesserte Dichtung für eine Elektrolysezellenanordnung der eingangs definierten Art, eine Elektrolysezellenanordnung mit einer solchen Dichtung, die Verwendung einer solchen Dichtung zur Abdichtung einer Elektrolysezelle sowie ein Verfahren zur Abdichtung solcher Anordnungen zu schaffen, die sich insbesondere durch eine in der praktischen Anwendung leichte Handhabung und einfache Montage beim Abdichten von Elektrolysezellen auszeichnen. Dabei soll die Dichtung neben der Dichtfunktion gleichzeitig eine wirksame Isolierung gegen elektrische Brückenbildung darstellen und als Abstandshalter fungieren.

Die erfindungsgemäße Dichtung weist die Merkmale des unabhängigen Anspruchs 1 auf. Sie stellt eine einfache und preiswerte, insbesondere aber leicht montierbare Lösung zur Verfügung, die auch die weiteren gewünschten Eigenschaften aufweist.

Das erfindungsgemäße Verfahren zum Abdichten einer Elektrolysezelle ergibt sich aus dem unabhängigen Anspruch 18.

Die vorliegende Erfindung wird nunmehr im Rahmen von Ausführungsbeispielen näher erläutert, wobei auf die beigefügten Zeichnungen Bezug genommen wird. Dabei zeigen:
Fig. 1 schematisch eine Schnittansicht einer Elektrolysezellenanordnung;
Fig. 2 schematisch eine erste Ausführungsform einer Dichtung, welche in die Anordnung nach Fig. 1 eingebaut wird;
Fig. 3 eine zweite Ausführungsform einer Dichtung, welche in die Anordnung nach Fig. 1 eingebaut wird; und
Fig. 4 eine perspektivische Teilansicht der Dichtung gemäß Fig. 3.

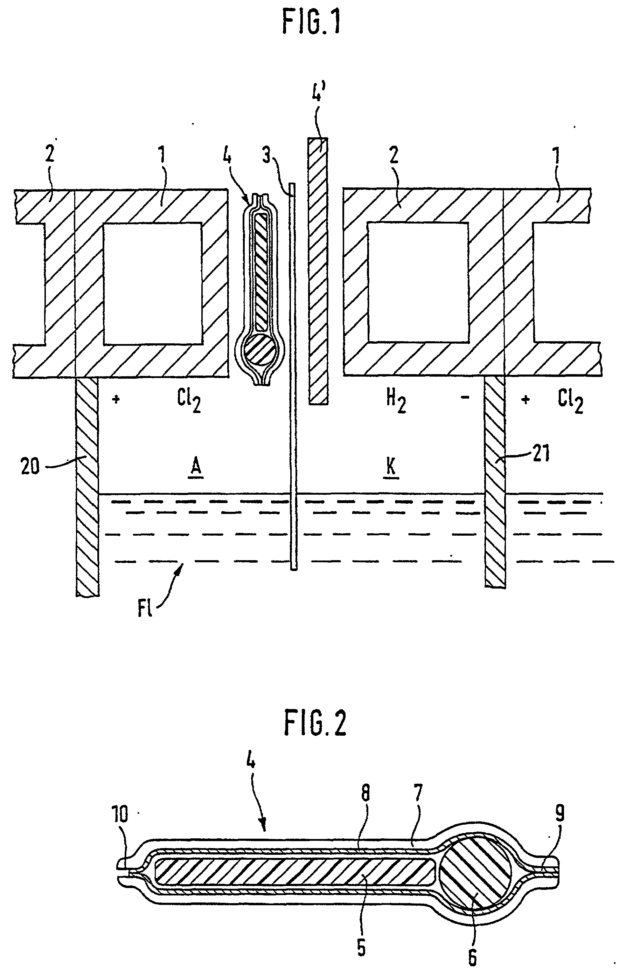

Fig. 1 zeigt schematisch eine Teil-Schnittansicht einer aus einer vorgegebenen Anzahl von Elektrolysezellen bestehenden Elektrolysezellenanordnung, mit einem ersten Rahmen 1, einem zweiten Rahmen 2, einem Separator 3 in Form einer Membrane, die zwischen die Rahmen 1 und 2 eingesetzt ist, um einen Anodenraum A und einen Kathodenraum K voneinander zu trennen, und einer Dichtung 4, die zwischen dem ersten Rahmen 1 und dem Separator 3 eingefügt ist, wobei ferner zwischen dem zweiten Rahmen 2 und dem Separator 3 noch ein weiteres Dichtungselement 4' eingefügt ist, das jedoch gegebenenfalls entfallen kann.

Aus Fig. 1 ist ersichtlich, daß die Dichtung 4 zwischen dem ersten Rahmen 1 und dem Separator 3 noch nicht endgültig montiert ist, vielmehr ist hier ein Vormontagezustand gezeigt. Vorzugsweise hat die Dichtung 4 die gleiche Breite wie die Rahmen 1, 2.

Wie sich aus Fig. 2 ersehen läßt, weist eine erste Ausführungsform einer Dichtung 4 eine erste Dichtungskomponente 5 in Form eines im wesentlichen flachen, quaderförmigen Gebildes definierter Dicke aus einem Vollmaterial sowie eine zweite Dichtungskomponente 6 auf, welche in Form eines im wesentlichen schnurförmig ausgebildeten Gebildes aus wenigstens einem spiralig gerollten folienförmigen Material aus expandiertem Polytetrafluorethylen gebildet ist. Bei dieser Dichtung 4 ist die erste Dichtungskomponente 5 nicht oder nur gering komprimierbar, während die zweite Dichtungskomponente 6 durch Komprimieren verformbar und verdichtbar ist, wobei ein derartiges Komprimieren während der Montage der Dichtung 4 innerhalb der Elektrolysezellenanordnung nach Fig. 1 erfolgt. Das Material für die erste Dichtungskomponente kann eine EPDM-Dichtung (Ethylenpropylendienterpolymer) oder eine PTFE verwendet werden, wobei das. EPDM über Gummiwerke/Kraiburg erhältlich ist. Da sich die zweite Dichtungskomponente (6) entlang einer Außenkante der ersten Dichtungskomponente 5 erstreckt und wegen der größeren Dicke der zweiten Dichtungskomponente gegenüber der ersten Dichtungskomponente, wird die zweite Dichtungskomponente bei der Montage der Elektrolysezellenanordnung in etwa auf die Dicke der nicht komprimierbaren ersten Komponente komprimiert.

Die erste Dichtungskomponente 5 sowie die zweite Dichtungskomponente 6, welche gemäß der Anordnung nach Fig. 2 unmittelbar nebeneinander angeordnet sind, sind durch eine gemeinsame Umhüllung 7 eingeschlossen, wobei diese Umhüllung 7 aus einer ePTFE-Folie besteht. Es handelt sich vorzugsweise um ein Halbfabrikat von W.L. Gore & Associates GmbH, bestehend aus einem ePTFE-Band hergestellt nach US 3,953,566 mit einer angesinterten Oberfläche.

Bei der praktischen Anwendung der in Fig. 2 dargestellten Dichtung 4, das heißt bei der Montage innerhalb der Elektrolysezellenanordnung nach Fig. 1, kommt der ersten Dichtungskomponente 5 die Funktion der Abstandshaltung und der zweiten Dichtungskomponente 6 die Funktion der Abdichtung zu, um letztendlich eine flüssigkeits- und gasdichte Abdichtung zu erzielen.

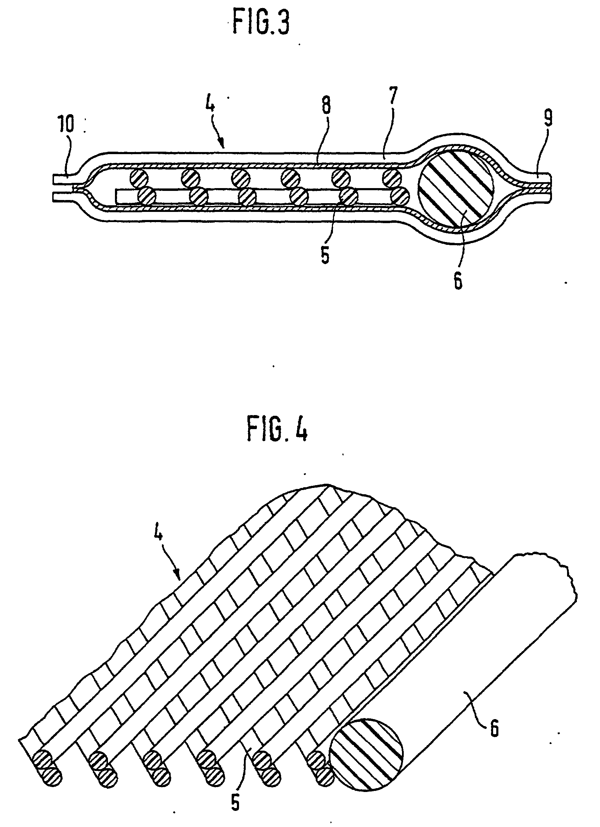

Gemäß der aus Fig. 3 und 4 ersichtlichen Ausführungsform ist eine Dichtung 4 vorgesehen, bei der die erste, im wesentlichen nicht komprimierbare Dichtungskomponente 5 aus einem im wesentlichen flachen, gitter- oder rostförmigen Gebilde (erhältlich als textiles Abstandsgewirk bei Fa. FUGRFIL® Technische Gewebe) besteht, während die zweite Dichtungskomponente 6 in Form eines im wesentlichen schnurförmig ausgebildeten Gebildes, vorzugsweise aus wenigstens einem spiralig gerollten folienförmigen Material aus expandiertem Polytetrafluorethylen gebildet wird. Dieses spiralig gerollte Material kann als O-Ring oder als Schnur mit einer Schließstelle eingesetzt werden. Die beiden Dichtungskomponenten 5 und 6 sind langgestreckt ausgebildet und innerhalb einer Umhüllung 7 aus einer Kunststoffolie parallel zueinander angeordnet. Die Umhüllung 7, die beispielsweise aus einer expandierten Polytetrafluorethylen-Folie besteht, weist innen eine Klebeschicht 8 auf, mittels welcher die Umhüllung 7 unmittelbar auf die beiden Dichtungskomponenten 5 und 6 aufgeklebt ist.

Fig. 4 zeigt eine teilweise perspektivische Ansicht der Dichtung 4, wobei jedoch in diesem Falle der Übersichtlichkeit halber die Umhüllung 7 weggelassen ist.

Die zweite Dichtungskomponente 6 in Form eines im wesentlichen schnurförmig ausgebildeten Gebildes aus wenigstens einem spiralig gerollten folienförmigen Material ist Gegenstand der deutschen Patentanmeldung DE-A-197 23 907 des gleichen Anmelders.

Wie in der vorgenannten Patentanmeldung im einzelnen erläutert ist, kann diese zweite Dichrungskomponente 6 über ihren Schnurquerschnitt einen Dichtegradienten aufweisen, welcher von der Außenseite der zweiten Dichtungskomponente ausgehend in Richtung zu deren Querschnittsmittelpunkt zunimmt.

Im übrigen kann noch vorgesehen sein, daß das expandierte Polytetrafluorethylen der zweiten Dichtungskomponente 6 wenigstens einen Füller aufweist, der wenigstens ein Material aufweist, das aus der Gruppe, bestehend aus Glas, Keramik, und Polymerharzen ausgewählt ist.

Bei dem Material für die erste Dichtungskomponente 5 handelt es sich vorzugsweise um ein nicht-leitendes Material. Insbesondere ist dieses nicht-leitende Material ein Kunststoff, vorzugsweise Polypropylen oder ein Elastomer.

Anhand der Fig. 1 wird nunmehr das erfindungsgemäße Verfahren zum Abdichten einer Elektrolysezelle am Beispiel der Chlor-Alkali-Elektrolyse näher erläutert. Eine derartige Elektrolysezelle wird, wie aus Fig. 1 ersichtlich, im wesentlichen aus einem ersten Rahmen 1, einem zweiten Rahmen 2, einem Separator 3 in Form einer Ionenaustauschmembrane, einer Dichtung 4, welche im Bereich zwischen dem ersten Rahmen 1 und dem Separator 3 montiert wird, sowie aus einem weiteren Dichtungselement 4', welches im Bereich zwischen dem Separator 3 und dem zweiten Rahmen 2 montiert wird, in dieser Reihenfolge zusammengesetzt. Im Bereich unterhalb des ersten Rahmens befindet sich der Anodenraum A, welcher auf der dem Separator 3 gegenüberliegenden Seite durch eine Anode 20 begrenzt wird, die mit dem ersten Rahmen 1 verbunden ist, wobei dieser Anodenraum A oberhalb der Flüssigphase Fl die Gasphase mit dem Chlorgas Cl₂ definiert. Auf der anderen Seite des Separators 3, das heißt im Bereich unterhalb des zweiten Rahmens 2 befindet sich der Kathodenraum K, der auf der dem Separator 3 gegenüberliegenden Seite durch die Kathode 21 begrenzt wird, welche mit dem zweiten Rahmen 2 verbunden ist. Im Käthodenraum K befindet sich oberhalb der Flüssigphase Fl die Gasphase mit dem Wasserstoffgas H₂. Die Dichtung 4, welche zwischen dem ersten Rahmen 1 und dem Separator 3 montiert wird, weist eine Ausführungsform auf, welche beispielsweise in Fig. 2 bzw. Fig. 3 und 4 veranschaulicht ist. Nach dem Einfügen dieser Dichtung 4 in den Zwischenraum zwischen dem ersten Rahmen 1 und dem Separator 3 wird die in Fig. 1 veranschaulichte Gesamtanordnung mit dem ersten Rahmen 1, mit dem zweiten Rahmen 2, der Dichtung 4, dem Separator 3 und dem weiteren Dichtungselement 4' in der Weise komprimiert, daß diese Elemente gemeinsam zusammengepreßt werden. Im Zuge dieses Verspannens wird lediglich die zweite Dichtungskomponente 6 der Dichtung 4 verformt und verdichtet, während die erste Dichtungskomponente 5, welche im wesentlichen nicht komprimierbar ist, ihre ursprüngliche Gestalt beibehält. Es versteht sich, daß die gemeinsame äußere Umhüllung 7 im Zuge des Komprimierens ebenfalls eine gewisse Verformung erfährt, die aber unberücksichtigt bleiben kann.

Im resultierenden Zustand der Dichtung 4 kommt der ersten Dichtungskomponente 5 primär die Funktion der Abstandshaltung im Bereich zwischen dem ersten Rahmen 1 und dem Separator 3 zu, während der zweiten Dichtungskomponente 6 nach ihrer Verformung und Verdichtung vorwiegend die Funktion der Abdichtung zukommt.

Die wie oben erläuterte Dichtung 4 zeichnet sich insbesondere durch Stabilität und Montagefreundlichkeit aus. Die erste Dichtungskomponente 5, sei es in Form eines im wesentlichen quaderförmigen Vollmaterialgebildes oder in Form eines im wesentlichen flachen, gitter- oder rostförmigen Gebildes, sorgt dafür, daß sich die Geometrie der Anordnung nicht verändert. Ein weiterer Vorteil der Dichtung 4 besteht darin, daß die zweite Dichtungskomponente 6 innerhalb der Umhüllung 7 durchlaufend ausgebildet sein kann, insbesondere wenn es sich hierbei um eine Schnurdichtung handelt, wie diese in der deutschen Patentanmeldung DE-A-19723987 erläutert ist.

## Patentansprüche

1. Dichtung (4) für eine Elektrolysezellenanordnung, wobei die Dichtung (4) eine erste, flache Dichtungskomponente (5) vorgegebener Dicke und eine zweite Dichtungskomponente (6) aufweist, welche gegenüber der ersten Dichtungskomponente eine größere Dicke besitzt und durch Komprimieren verformbar und verdichtbar ist, wobei der ersten Dichtungskomponente (5) die Funktion der Abstandshaltung und der zweiten Dichtungskomponente (6) die Funktion der Abdichtung zukommen und wobei die beiden Dichtungskomponenten (5, 6) in einer gemeinsamen Umhüllung (7) aufgenommen sind, dadurch gekennzeichnet, daß die Umhüllung (7) eine Folie aus expandiertem Polytetrafluorethylen (ePTFE) ist.

2. Dichtung nach Anspruch 1, wobei die erste Dichtungskomponente (5) ein im wesentlichen gitter- oder rostförmiges Gebilde ist.

3. Dichtung nach Anspruch 1, wobei die erste Dichtungskomponente (5) quaderförmig ist.

4. Dichtung nach einem der vorhergehenden Ansprüche, wobei die erste Dichtungskomponente (5) aus einem nicht-leitenden Material besteht.

5. Dichtung nach Anspruch 4, wobei das nicht-leitende Material ein Kunststoff ist.

6. Dichtung nach Anspruch 5, wobei der Kunststoff Polypropylen oder ein Elastomer ist.

7. Dichtung nach einem der vorhergehenden Ansprüche, wobei die zweite Dichtungskomponente (6) aus expandiertem Polytetrafluorethylen (ePTFE) besteht.

8. Dichtung nach einem der Ansprüche 1 bis 6, wobei die zweite Dichtungskomponente (6) aus Ethylenpropyldienterpolymer (EPDM) besteht.

9. Dichtung nach einem der vorhergehenden Ansprüche, wobei die zweite Dichtungskomponente (6) ein schnurförmiges Gebilde ist.

10. Dichtung nach einem der vorhergehenden Ansprüche, wobei ein schnurförmiges Gebilde aus wenigstens einem spiralig gerollten folienförmigen Material besteht.

11. Dichtung nach Anspruch 10, wobei das spiralig gerollte Material ein O-Ring oder eine Schnur mit Schließstelle ist.

12. Dichtung nach Anspruch 10 oder 11, wobei die zweite Dichtungskomponente (6) über ihren Schnurquerschnitt einen Dichtegradienten aufweist, welcher von der Außenseite der zweiten Dichtungskomponente (6) ausgehend in Richtung zu deren Querschnittsmittelpunkt zunimmt.

13. Dichtung nach einem der vorhergehenden Ansprüche, wobei sich die zweite Dichtungskomponente (6) entlang einer Außenkante der ersten Dichtungskomponente (5) erstreckt.

14. Dichtung nach einem der vorhergehenden Ansprüche, wobei das expandierte Polytetrafluorethylen der zweiten Dichtungskomponente (6) wenigstens einen Füller aufweist, welcher wenigstens ein Material aufweist, das aus der Gruppe ausgewählt ist, welche besteht aus Glas, Keramik und Polymerharzen.

15. Dichtung nach einem der vorhergehenden Ansprüche, wobei die Umhüllung (7) unmittelbar auf die beiden Dichtungskomponenten (5, 6) aufgeklebt ist.

16. Verwendung einer Dichtung (4) nach einem der Ansprüche 1 bis 14 zum Abdichten einer Elektrolysezelle, in der die Dichtung (4) zwischen mindestens einem ersten Rahmen (1) oder einem zweiten Rahmen (2) und einem Separator (3) eingesetzt und komprimiert wird, wobei der Separator (3) einen Anodenraum (A) und einen Kathodenraum (K) trennt, die durch den ersten und den zweiten Rahmen begrenzt sind.

17. Elektrolysezellenanordnung mit einem Anodenraum und einem Kathodenraum, welche aufweist:
- einen ersten Rahmen (1) in dem Anodenraum (A),
- einen zweiten Rahmen (2) in dem Kathodenraum (K),
- einen Separator (3), der zwischen die Rahmen (1, 2) eingesetzt ist, um den Anodenraum (A) und den Kathodenraum (K) voneinander zu trennen, und
- eine Dichtung (4) zwischen mindestens dem ersten Rahmen (1) oder dem zweiten Rahmen (2) und dem Separator (3),
dadurch gekennzeichnet, daß die Dichtung (4) eine Dichtung gemäß einem der Ansprüche 1 bis 15 ist.

18. Verfahren zum Abdichten einer Elektrolysezelle, mit folgenden Schritten:
(a) Anordnen einer ersten, flachen Dichtungskomponente (5) vorgegebener Dicke und einer zweiten Dichrungskomponente (6), die gegenüber der ersten Dichtungskomponente eine größere Dicke besitzt und durch Komprimieren verformbar und verdichtbar ist, in einer Umhüllung (7) aus ePTFE-Folie zur Bildung einer Dichtung (4);
(b) Einfügen der Dichtung (4) zwischen mindestens einen ersten Rahmen (1) oder einen zweiten Rahmen (2) und einen Separator (3); und
(c) Komprimieren des ersten Rahmens (1) und des zweiten Rahmens (2), des Separators (3) und der Dichtung (4) in der Weise, daß die zweite Dichtungskomponente (6) derart verformt und verdichtet wird, daß der ersten Dichtungskomponente (5) die Funktion der Abstandshaltung und der zweiten Dichtungskomponente (6) die Funktion der Abdichtung zukommen.

## Claims

1. A seal (4) for an electrolytic cell assembly, wherein the seal (4) has a first flat seal component (5) of given thickness and a second seal component (6) having greater thickness than the first seal component and being deformable and compactable by compression, wherein the first seal component (5) has the function of spacing and the second seal component (6) the function of sealing, and wherein the two seal components (5, 6) are received in a common wrapper (7), characterized in that the wrapper (7) is a film of expanded polytetrafluoroethylene (ePTFE).

2. A seal according to claim 1, wherein the first seal component (5) is a substantially lattice- or grid-shaped formation.

3. A seal according to claim 1, wherein the first seal component (5) is cuboid.

4. A seal according to any of the above claims, wherein the first seal component (5) consists of a nonconductive material.

5. A seal according to claim 4, wherein the nonconductive material is a plastic.

6. A seal according to claim 5, wherein the plastic is polypropylene or an elastomer.

7. A seal according to any of the above claims, wherein the second seal component (6) consists of expanded polytetrafluoroethylene (ePTFE).

8. A seal according to any of claims 1 to 6, wherein the second seal component (6) consists of ethylene-propylene-diene terpolymer (EPDM).

9. A seal according to any of the above claims, wherein the second seal component (6) is a rope-shaped formation.

10. A seal according to any of the above claims, wherein a rope-shaped formation consists of at least one spiral wound filmlike material.

11. A seal according to claim 10, wherein the spiral wound material is an O-ring or a rope with a closing place.

12. A seal according to claim 10 or 11, wherein the second seal component (6) has a density gradient increasing across its rope cross section from the outside of the second seal component (6) toward its cross-sectional center.

13. A seal according to any of the above claims, wherein the second seal component (6) extends along an outside edge of the first seal component (5).

14. A seal according to any of the above claims, wherein the expanded polytetrafluoroethylene of the second seal component (6) has at least one filler having at least one material selected from the group comprising glass, ceramics and polymer resins.

15. A seal according to any of the above claims, wherein the wrapper (7) is affixed directly to the two seal components (5, 6).

16. Use of a seal (4) according to any of claims 1 to 14 for sealing an electrolytic cell in which the seal (4) is inserted and compressed between at least a first frame (1) or second frame (2) and a separator (3), the separator (3) separating an anode space (*A*) and cathode space (*K*) limited by the first and second frames.

17. An electrolytic cell assembly with an anode space and cathode space having::
- a first frame (1) in the anode space (*A*),
- a second Same (2) in the cathode space (*K*),
- a separator (3) inserted between the frames (1, 2) to separate the anode space (*A*) and cathode space (*K*) from each other, and
- a seal (4) between at least the first frame (1) or second frame (2) and the separator (3),
characterized in that the seal (4) is a seal according to any of claims 1 to 15.

18. A method for sealing an electrolytic cell having the following steps:
(a) disposing a first flat seal component (5) of given thickness and a second seal component (6) having greater thickness than the first seal component and being deformable and compactable by compression, in a wrapper (7) of ePTFE film to form a seal (4);
(b) inserting the seal (4) between at least a first frame (1) or second frame (2) and a separator (3); and
(c) compressing the first frame (1) and second Fame (2), separator (3) and seal (4) in such a way that the second seal component (6) is deformed and compacted such that the first seal component (5) has the function of spacing and the second seal component (6) the function of sealing.

## Revendications

1. Dispositif d'étanchéité (4) pour un dispositif de cellules électrolytiques, le dispositif d'étanchéité (4) possédant un premier composant plat d'étanchéité (5) ayant une épaisseur prédéterminée et un second composant d'étanchéité (6), qui possède une épaisseur supérieure à celle du premier composant d'étanchéité et peut être déformé et pressé par compression, et dans lequel le premier composant d'étanchéité (5) assume la fonction d'entretoisement et le second composant d'étanchéité (6) assume la fonction d'étanchéité, et dans lequel les deux composants d'étanchéité (5, 6) sont logés dans une enveloppe commune (7), caractérisé en ce que l'enveloppe (7) est une feuille de polytétrafluoroéthylène expansé (ePTFE).

2. Dispositif d'étanchéité selon la revendication 1, dans lequel le premier composant d'étanchéité (5) est une structure essentiellement en forme de grille -ou de treillis.

3. Dispositif d'étanchéité selon la revendication 1, dans lequel le premier composant d'étanchéité (5) possède une forme parallélépipédique.

4. Dispositif d'étanchéité selon l'une des revendications précédentes, dans lequel le premier composant d'étanchéité (5) est réalisé en un matériau non conducteur.

5. Dispositif d'étanchéité selon la revendication 4, dans lequel le matériau non conducteur est une matière plastique.

6. Dispositif d'étanchéité selon la revendication 5, dans lequel la matière plastique est du polypropylène ou un élastomère.

7. Dispositif d'étanchéité selon l'une des revendications précédentes, dans lequel le second composant d'étanchéité (6) est constitué par du polytétrafluoroéthylène expansé (ePTFE).

8. Dispositif d'étanchéité selon l'une des revendications 1 à 6, dans lequel le second composant d'étanchéité (6) est formé d'un terpolymère éthylènepropyldiène (EPDM).

9. Dispositif d'étanchéité selon l'une des revendications précédentes, dans lequel le second composant d'étanchéité (6) est une structure en forme de cordon.

10. Dispositif d'étanchéité selon l'une des revendications précédentes, dans lequel la structure en forme de cordon est constituée par au moins un matériau en forme de feuille, enroulé sous forme spiralée.

11. Dispositif d'étanchéité selon la revendication 10, dans lequel le matériau enroulé sous forme spiralé est un joint torique ou un cordon comportant un point de fermeture.

12. Dispositif d'étanchéité selon la revendication 10 ou 11, dans lequel le second composant d'étanchéité (6) possède, dans sa section transversale de cordon, un gradient de densité, qui augmente depuis la face extérieure du second composant d'étanchéité (6) en direction du centre de la section transversale de ce composant.

13. Dispositif d'étanchéité selon l'une des revendications précédentes, dans lequel le second composant d'étanchéité (6) s'étend le long d'un bord extérieur du premier composant d'étanchéité (5).

14. Dispositif d'étanchéité selon l'une des revendications précédentes, dans lequel le polytétrafluoroéthylène expansé du second composant d'étanchéité (6) possède au moins une charge, qui comporte au moins un matériau qui est choisi dans le groupe constitué par le verre, la céramique et des résines polymères.

15. Dispositif d'étanchéité selon l'une des revendications précédentes, dans lequel l'enveloppe (7) est collée directement sur les deux composants d'étanchéité (5, 6).

16. Utilisation d'un dispositif d'étanchéité (4) selon l'une des revendications 1 à 14 pour étanchéifier une cellule d'électrolyse, dans laquelle le dispositif d'étanchéité (4) est inséré et comprimé entre au moins un premier cadre (1) ou un second cadre (2) et un séparateur (3), le séparateur (3) séparant l'un de l'autre un espace anodique (A) et un espace cathodique (K), qui sont délimités par les premier et second cadres.

17. Dispositif de cellule électrolytique comportant un espace anodique et un espace cathodique, qui comprend:
- un premier cadre (1) situé dans l'espace anodique (A),
- un second cadre (2) situé dans l'espace cathodique (K),
- un séparateur (3), qui est inséré entre les cadres (1, 2) pour séparer l'un de l'autre l'espace anodique (A) et l'espace cathodique (K), et
- un dispositif d'étanchéité (4) constitué par au moins le premier cadre (1) ou le second cadre (2) et le séparateur (3),
caractérisé en ce que le dispositif d'étanchéité (4) est un dispositif d'étanchéité conformément à l'une des revendications 1 à 15.

18. Procédé pour étanchéifier une cellule d'électrolyse, comprenant les étapes suivantes consistant à:
a) disposer un premier composant plat d'étanchéité (5) ayant une épaisseur prédéterminée et un second composant d'étanchéité (6), qui possède une épaisseur supérieure à celle du premier composant d'étanchéité et peut être déformé et pressé par compression, dans une enveloppe (7) formée d'une feuille de ePTFE pour former un dispositif d'étanchéité (4);
b) insérer le dispositif d'étanchéité (4) entre au moins un premier cadre (1) ou un second cadre (2) et un séparateur (3); et
c) comprimer le premier cadre (1) et le second cadre (2), le séparateur (3) et le dispositif d'étanchéité (4) de telle sorte que le second composant d'étanchéité (6) est déformé et pressé de telle sorte que le premier composant d'étanchéité (5) assume le rôle d'entretoise et que le second composant d'étanchéité (6) assume la fonction d'étanchéité.
